# EUROPEAN PATENT APPLICATION

(11) **EP 4 379 391 A1**
(43) Date of publication of application: **05.06.2024**
(21) Application number: 23212901.5
(22) Date of filing: 29.11.2023
(51) Int. Cl.: G01N 35/00

(54) **ANALYSIS APPARATUS**

(30) Priority: 30.11.2022 JP 2022191248
(71) Applicant: Shimadzu Corporation, Nakagyo-ku, Kyoto-shi, Kyoto 604-8511 (JP)
(72) Inventor: TANAKA, Hiroto, Kyoto-shi, Kyoto, 604-8511 (JP)
(74) Representative: Müller-Boré & Partner Patentanwälte PartG mbB

(57) **Abstract**

An analysis apparatus according to this invention includes a measurer configured to measure a sample; a temperature adjuster configured to adjust a temperature of the sample during measurement; a display configured to display information: and a controller configured to control a function of displaying an interface on the display as the information, wherein the interface includes the followings: a plurality of items including temperature and time, and a graphic schematic diagram representing a thermal cycle with time and visualizing the plurality of items on the thermal cycle.

## Description

### BACKGROUND OF THE INVENTION

### Field of the Invention

The present invention relates to an analysis apparatus.

### Description of the Background Art

Conventionally, an analysis apparatus configured to produce a measurement program is known. Such an apparatus is disclosed in Japanese Patent Laid-Open Publication No. JP 2011-232212, for example.

The above Japanese Patent Laid-Open Publication No. JP 2011-232212 discloses an automatic analysis apparatus configured to analyze a specimen. The automatic analysis apparatus includes a temperature unit configured to control a function of adjusting a specimen to a desired temperature in accordance with preset temperature values. The preset temperature values can be specified by a temperature program that repeats a cycle in which a temperature of the specimen is increased at a predetermined temperature gradient, and is then decreased at a predetermined temperature gradient.

Although not stated in the above Japanese Patent Laid-Open Publication No. JP 2011-232212, when such a temperature program is produced in automatic analysis apparatuses similar to the above Japanese Patent Laid-Open Publication No. JP 2011-232212, users occasionally specify a plurality of items including temperatures and time periods. In such occasions, temperatures and time periods in the plurality of items represent different temperature items and time period items, but users who are inexperienced at producing such a temperature program may not understand which temperatures and time periods in the plurality of items represent which temperature items and time period items in the temperature program. In this case, because the users who are inexperienced at producing the temperature program necessarily read an instruction manual of the automatic analysis apparatus to understand which temperatures and time periods in the plurality of items represent which temperature items and time period items in the temperature program, it takes time to produce the temperature program. For this reason, users who are inexperienced at producing a temperature program (measurement program) cannot easily produce the measurement program.

### SUMMARY OF THE INVENTION

An analysis apparatus according to one aspect of this invention includes a measurer configured to measure a sample; a temperature adjuster configured to adjust a temperature of the sample during measurement; a display configured to display information: and a controller configured to control a function of displaying an interface on the display as the information, wherein the interface includes the followings: a plurality of items including temperature and time, and a graphic schematic diagram representing a thermal cycle with time and visualizing the plurality of setting items on the thermal cycle.

In the analysis apparatus according to the aforementioned one aspect of this invention, as discussed above, the controller is configured to control a function of displaying an interface on the display as the information, wherein the interface includes the followings: a plurality of items including temperature and time, and a graphic schematic diagram schematically representing a thermal cycle with time and visualizing the plurality of items on the thermal cycle. Accordingly, because users can visually compare a plurality of items with a graphic schematic diagram representing a thermal cycle with time based on the plurality of items, they can easily understand which items represent which temperatures and times in the measurement program without reading an instruction manual of the automatic analysis apparatus. Consequently, even a user who is inexperienced at producing the measurement program can understand which items represent which temperatures and times in the measurement program, and can easily produce a measurement program.

### BRIEF DESCRIPTION OF THE DRAWINGS

FIG. 1 is a block diagram entirely shooing a configuration of an analysis apparatus according to one embodiment of the present invention.
FIG. 2 is a diagram (1) showing a setting screen of the analysis apparatus according to the one embodiment of the present invention.
FIG. 3 is a diagram (2) showing a setting screen of the analysis apparatus according to the one embodiment of the present invention.
FIG. 4 is a diagram showing a setting screen of the analysis apparatus according to the one embodiment of the present invention with a simulation graph being displayed.

### DESCRIPTION OF THE PREFERRED EMBODIMENT

Embodiments embodying the present invention will be described with reference to the drawings.

### (Entire Configuration of Analysis Apparatus)

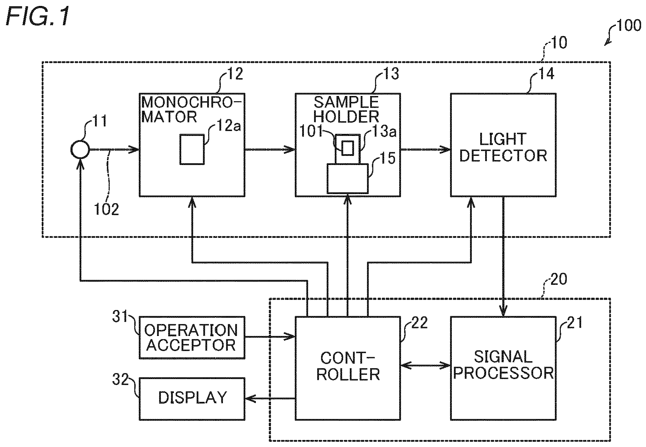

An analysis apparatus 100 according to one embodiment is now entirely described with reference to FIG. 1.

As shown in FIG. 1, analysis apparatus 100 is a spectroscopic analysis apparatus configured to analyze optical properties of a sample 101 such as liquid. The analysis apparatus 100 includes a measurer 10 and a controller/processor 20.

The measurer 10 is configured to measure the sample 101. Specifically, the measurer 10 is a so-called spectrophotometer, and includes a light source 11, a monochromator 12, a sample holder 13, a light detector 14, and a temperature adjuster 15. The monochromator 12, the sample holder 13, and the light detector 14 are arranged in this order on a optical path 102 of light emitted by the light source 11.

For example, the light source 11 includes a deuterium lamp, and is configured to emit light including ultraviolet rays. The monochromator 12 is configured to separate polychromatic light incident on the monochromator 12 into monochromatic light. The monochromator 12 includes optical elements 12a such as mirrors and diffraction gratings. The sample holder 13 is configured to accommodate a sample cell 13a for holding the sample 101. For example, the light detector 14 includes a photodiode, and is configured to detect incident light. The temperature adjuster 15 is configured to adjust a temperature of the sample 101. For example, the temperature adjuster 15 includes a Peltier element, and is configured to be able to heat and cool the sample 101. Also, the temperature adjuster 15 includes a temperature detector configured to be able to adjust a temperature of the sample 101 to a target temperature based on a detection result of a temperature of the sample 101 detected by the temperature detector.

When the measurer 10 is irradiated with light from the light source 11, the irradiation light is incident on the monochromator 12. Light having a predetermined wavelength is selectively emitted as monochromatic light from the irradiation light. The light emitted as monochromatic light is incident on the sample 101 in the sample cell 13a of the sample holder 13. Light that penetrates the sample 101 is incident on the light detector 14. A temperature of the sample 101 is adjusted to predetermined temperatures by the temperature adjuster 15 as needed when the sample 101 is measured by the measurer 10.

The controller/processor 20 is a so-called personal computer, and includes a signal processor 21 and a controller 22. The signal processor 21 acquires detection signals from the light detector 14, and applies calculation to the acquired detection signals whereby acquiring optical properties such as absorbance of the sample 101. The controller 22 is configured to control operations of the measurer 10, the signal processor 21, etc. The controller 22 is connected to an operation unit 31 configured to receive various manual operations relating to measurement from a user, and a display 32 configured to display various types of information relating to the measurement. The signal processor 21 and the controller 22 include a processor such as a CPU configured to execute a program, and a storage such as a memory configured to store the program.

### (Configuration of Setting Screen)

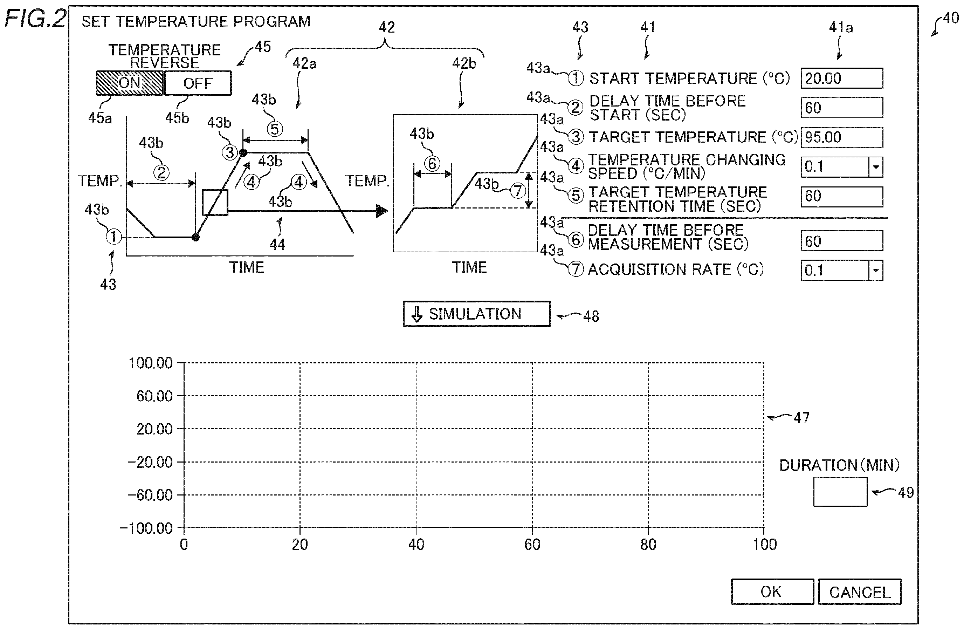

The analysis apparatus 100 occasionally measures the sample 101 by using the measurer 10 while changing a temperature of the sample by using the temperature adjuster 15. In such occasions, as shown in FIGS. 2 to 4, the analysis apparatus 100 previously produces a measurement program (temperature program) for measuring the sample 101 by using the measurer 10 while changing a temperature of the sample by using the temperature adjuster 15. The measurement program is produced to set a thermal cycle with time in the measurement. In the analysis apparatus 100, the temperature adjuster 15 is configured to control the temperature of the sample 101 in the measurement based on the measurement program previously produced.

A setting screen 40 of the measurement program for obtaining a Tm value (melting temperature) of an nucleic acid included in the sample 101 is shown in FIGS. 2 to 4 in a case in which the sample 101 includes the nucleic acid. Nucleic acids have a double-stranded helix structure, but as its temperature rises, hydrogen bonds are broken so that double strands are gradually dissociated, and as a result they become a single-stranded structure. This phenomenon is called melting of nucleic acids, and the temperature at which the ratio between double strands and single strands is equal is called a melting temperature. The melting temperature is an index of thermal stability of a nucleic acid. Nucleic acids have an ultraviolet absorption peak around 260 nm, and their absorbance increases when they melt. The analysis apparatus 100 is configured to irradiate the sample 101 containing a nucleic acid with ultraviolet light around 260 nm while changing its temperature, and to measure its absorbance so as to acquire measurement data whereby obtaining its Tm value.

When the measurement program is produced, the setting screen 40 is displayed on the display 32, and a user enters values in an entry field set 41a by using an operation unit 31 while watching the setting screen 40 so that a plurality of items (a plurality of setting items) 41 including temperatures and times are set. In the exemplary screen shown in FIGS. 2 to 4, the plurality of items 41 include seven items including a start temperature, a delay time before start, a target temperature, a temperature changing speed, a target temperature retention time, a delay time before measurement and a acquisition rate. The start temperature refers to a temperature at start of measurement. The delay time before start refers to a standby time to wait the start of measurement. Also, the target temperature refers to the maximum temperature to which a temperature of the sample will reach in the measurement. The temperature changing speed refers to a temperature changing speed in a temperature rise to the target temperature, or a temperature changing speed in a temperature decrease from the target temperature. The target temperature retention time refers to a time to keep the target temperature. The delay time before measurement refers to a time to wait the measurement during the temperature rise to the target temperature or the temperature decrease from the target temperature. The acquisition rate refers to a time interval between measurement events during the temperature rise to the target temperature or the temperature decrease from the target temperature.

In this case, temperatures and time periods in the plurality of items 41 represent different temperature items and time period items, but users who are inexperienced at producing such a measurement program may not understand which temperatures and time periods in the plurality of items 41 represent which temperature items and time period items in the measurement program.

To address this, in this embodiment, the controller 22 is configured, in production of the measurement program for measuring the sample 101 by using the measurer 10 while changing the temperature of the sample by using the temperature adjuster 15, to control a function of displaying an interface on the display 32 as the information. The interface includes a plurality of items 41 in the measurement program including temperature and time, and a graphic schematic diagram 42 schematically representing a thermal cycle with time (temperature change of the measurement program with time) and visualizing the plurality of items 41 on the thermal cycle. In this function of displaying, the controller 22 is configured to display on the display the plurality of items 41 and the graphic schematic diagram 42 on the common setting screen 40. The graphic schematic diagram 42 is an image schematically illustrating a temperature change in accordance with the plurality of items 41 to allow users to understand which temperatures and time periods in the plurality of items 41 represent which temperature items and time period items in the measurement program. The controller 22 is configured to execute a measurement and control the temperature adjuster 15 in accordance with the measurement program. The interface is configured to receive values for the plurality of items input by a user, and the values are set in the measurement program.

In this embodiment, the controller 22 is configured to control a function of displaying on the display 32 correspondence-recognizing indication 43 that allows a user to visually recognize correspondences between the plurality of items 41 and parts of the graphic schematic diagram 42. Also, the correspondence-recognizing indication 43 includes first correspondence-recognizing indication parts 43a displayed on a plurality-of-setting-items 41 side to represent the correspondences of the plurality of items 41 to the parts of the graphic schematic diagram 42, and second correspondence-recognizing indications 43b displayed on a graphic-schematic-diagram 42 side to represent the correspondences of the parts of the graphic schematic diagram 42 to the plurality of items 41.

The first correspondence-recognizing indication parts 43a are arranged in header sides of item names of the plurality of items 41. The second correspondence-recognizing indication parts 43b corresponding the plurality of items 41 are assigned to the parts of the graphic schematic diagram 42. The first correspondence-recognizing indication parts 43a and the second correspondence-recognizing indication parts 43b are indicated by numerals, and are assigned with different numbers corresponding to the items 41. The different numbers are assigned to the first correspondence-recognizing indication parts 43a and the second correspondence-recognizing indication parts 43b generally in a time order corresponding to a time axis of the graphic schematic diagram. Different characters other than numerals (e.g., alphabets), symbols, or colors may be assigned to the first correspondence-recognizing indication parts 43a and the second correspondence-recognizing indication parts 43b.

Some of the second correspondence-recognizing indication parts 43b corresponding to some of the items 41 that can be indicated by a point (start temperature and target temperature) are associated with their corresponding points in the graphic schematic diagram 42. Other second correspondence-recognizing indication parts 43b corresponding to other items 41 that can be indicated by a range or an interval (delay time before start, target temperature retention time, delay time before measurement and acquisition rate) are associated with their ranges or intervals in the graphic schematic diagram 42. The other second correspondence-recognizing indication parts 43b corresponding to the other items 41 that can be indicated by an arrow (temperature changing speed) are associated with their corresponding arrows in the graphic schematic diagram 42.

The first correspondence-recognizing indication parts 43a and the second correspondence-recognizing indication parts 43b may be classified into their corresponding parameter types of the items 41, and different colors may be assigned to the parameter types. For example, first, third and seventh parts of the first correspondence-recognizing indication parts 43a and the second correspondence-recognizing indication parts 43b representing temperatures may be indicated in a first color; second, fifth and sixth parts of the first correspondence-recognizing indication parts 43a and the second correspondence-recognizing indication parts 43b representing times may be indicated in a second color different from the first color; and fourth parts of the first correspondence-recognizing indication parts 43a and the second correspondence-recognizing indication parts 43b representing a temperature changing speed may be indicated in a third color different from the first and second colors so that the first correspondence-recognizing indication parts 43a and the second correspondence-recognizing indication parts 43b may be classified by the different colors into their corresponding types of the items 41.

In this embodiment, the graphic schematic diagram 42 includes a first graphic schematic diagram part 42a entirely representing the thermal cycle with time, and a second graphic schematic diagram part 42b corresponding an enlarged part of the first graphic schematic diagram part 42a. The first graphic schematic diagram part 42a is provided to indicate the start temperature, the delay time before start, the target temperature, the temperature changing speed and the target temperature retention time in the plurality of items 41. The second graphic schematic diagram part 42b is provided to indicate the delay time before measurement and the acquisition rate in the plurality of items 41. Although a first segment of a line corresponding to the delay time before start extends downward in a rightward direction in the first graphic schematic diagram part 42a, this line segment extending downward in the rightward direction merely schematically represents a temperature change to the start temperature from ambient temperature, and the first segment of the line corresponding to the delay time before start does not always exhibit downward extension in the rightward direction.

In addition, between the first graphic schematic diagram part 42a and the second graphic schematic diagram part 42b, a correspondence-recognizing indication 44 is indicated to allows a user to visually recognize correspondences between the first graphic schematic diagram part 42a and the second graphic schematic diagram part 42b. The correspondence-recognizing indication 44 includes a frame indication part representing an enlarge part of the first graphic schematic diagram part 42a, and an arrow indication part extending from the frame indication part to the second graphic schematic diagram part 42b.

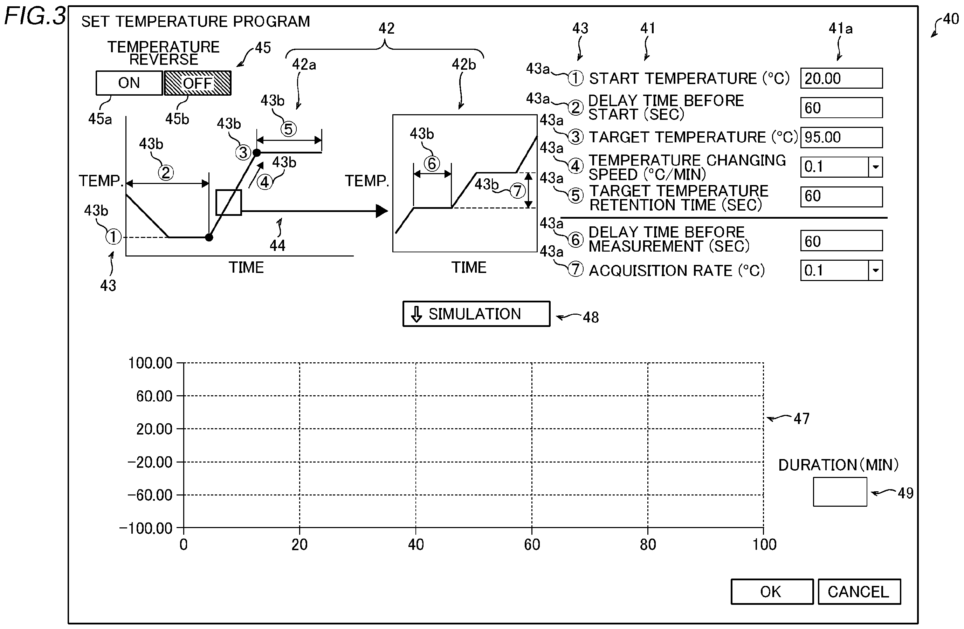

As shown in FIGS. 2 and 3, in this embodiment, the analysis apparatus 100 is configured to be able to produce a plurality of measurement programs corresponding to a plurality of types of measurement patterns. The controller 22 is configured to display on the display 32 the graphic schematic diagram 42 corresponding to one selected from the plurality of types of measurement patterns. Specifically, the controller 22 is configured to display on the display 32 a switch icon 45 for switching between the plurality of types of measurement patterns. The controller 22 is configured, when a user operates the switch icon 45, to display on the display 32 the graphic schematic diagram 42 corresponding to one selected from the plurality of types of measurement patterns by switching between the plurality of types of measurement patterns through the manual operation of the switch icon. The switch icon 45 is an example of a "second switch icon" in the claims.

In a case of a measurement program that acquires a Tm value of a nucleic acid, the measurement program has two types of measurement patterns. Specifically, the two types of measurement patterns are a first measurement pattern in which a temperature of the sample is first adjusted from a start temperature to a target temperature and is then adjusted from the target temperature to the start temperature (a measurement pattern including an temperature reverse process shown in FIG. 2), and a second measurement pattern in which a temperature of the sample is adjusted only from a start temperature to a target temperature without adjusting the temperature from the target temperature to the start temperature (a measurement pattern without the temperature reverse process shown in FIG. 3). Because measurement results in temperature rise and temperature decrease are sometimes different from each other, users can selectively use first measurement pattern and the second measurement pattern depending on their needs.

The switch icon 45 includes a first icon part 45a (ON icon) for selecting the first measurement pattern and a second icon part 45b (OFF icon) for selecting the second measurement pattern. When a user operates the first icon 45a by using the operation unit 31, the graphic schematic diagram 42 corresponding to the first measurement pattern will be displayed on the display 32. The first graphic schematic diagram part 42a of the graphic schematic diagram 42 corresponding to the first measurement pattern is a graphic schematic diagram in a case in which the temperature reverse process is used. In other words, the first graphic schematic diagram part 42a corresponding to the first measurement pattern is a graphic schematic diagram in which a temperature of the sample rises at a predetermined temperature changing speed from a start temperature to a target temperature, is kept at the target temperature for a target temperature retention time, and is then decreases at the predetermined temperature changing speed from the target temperature to the start temperature.

When a user operates the second icon 45b by using the operation unit 31, the graphic schematic diagram 42 corresponding to the second measurement pattern will be displayed on the display 32. The first graphic schematic diagram part 42a of the graphic schematic diagram 42 corresponding to the second measurement pattern is a graphic schematic diagram in a case in which the temperature reverse process is not used dissimilar to the first measurement pattern. In other words, the first graphic schematic diagram part 42a corresponding to the first measurement pattern is a graphic schematic diagram in which a temperature of the sample rises at a predetermined temperature changing speed from a start temperature to a target temperature and is kept at the target temperature for a target temperature retention time, and the measurement then ends without decreasing the temperature. The common second graphic schematic diagram part 42b is used both in the first measurement pattern and the second measurement pattern. The controller 22 is configured to display one of the first icon 45a and the second icon 45b that is selected in a color different from another of the first and second icons on the display 32. Accordingly, the user can easily know whether the first measurement pattern or the second measurement pattern is selected.

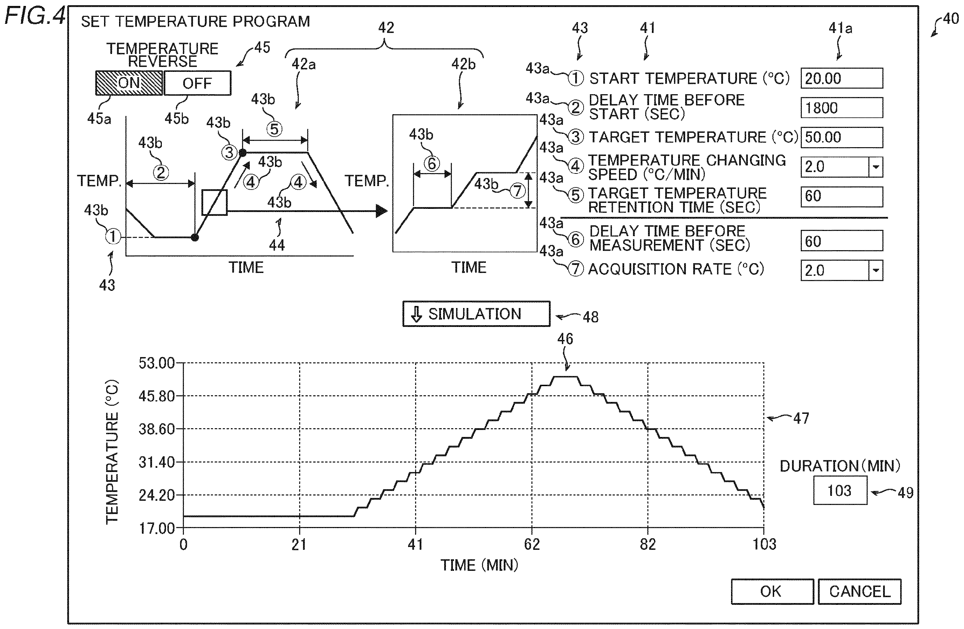

As shown in FIGS. 2 to 4, in this embodiment, the controller 22 is configured to control a function of displaying on the display 32 a display area 47 for displaying a simulation graph 46 (see FIG. 4) obtained by simulating the measurement program based on values that are input as the plurality of items 41, and a switch icon 48 for accepting manual operation of displaying the simulation graph 46 on the display area 47. The controller 22 is configured to display the simulation graph 46 on the display area 47 in response to the manual operation on the switch icon 48. The display area 47 and the switch icon 48 are examples of a "first display area" and a "first switch icon", respectively, in the claims.

In this embodiment, the controller 22 is configured to control a function of displaying on the display 32 a display area 49 for displaying time required to execute the measurement program based on values that are input as the plurality of items 41. The controller 22 is configured to display the required time (duration) on the display area 49 when a user operates the switch icon 48, in addition to the simulation graph 46 on the display area 47. The display area 49 is an example of a "second display area" in the claims.

As shown in FIG. 4, after providing values into fields in the entry field set 41a corresponding to the plurality of items 41 by using the operation unit 31, the user can manually operate the switch icon 48 by using the operation unit 31. When the switch icon 48 is activated by the manually operation, the simulation graph 46 and the required time are acquired by simulating measurement based on values provided in the entry field set 41a at the activation of the switch icon 48 so that the simulation graph 46 is displayed in the display area 47 and the required time is indicated in the display area 49. Also, after the user reenters values into the entry field set 41a and manually operates the switch icon 48 by using the operation unit 31 again, an updated simulation graph 46 can be displayed. Although the simulation graph 46 corresponding to the first measurement pattern is illustratively shown in FIG. 4 for convenience, a simulation graph 46 corresponding to the second measurement pattern can be displayed when the second icon 45b is selected and the switch icon 48 is then manually operated.

The controller 22 is configured to display the plurality of items 41, the graphic schematic diagram 42, the simulation graph 46, the display area 47, the switch icon 48, and the display area 49 on the common setting screen 40. The plurality of items 41 and the graphic schematic diagram 42 are arranged adjacent to each other in a rightward/leftward direction on the setting screen 40. Also, the first graphic schematic diagram part 42a and the second graphic schematic diagram part 42b are arranged adjacent to each other in the rightward/leftward direction on the setting screen 40. Also, the plurality of items 41 and the graphic schematic diagram 42, which relate to setting indication, and the simulation graph 46, the display area 47, the switch icon 48 and the display area 49, which relate to simulation indication, are arranged adjacent to each other in an upward/downward direction on the setting screen 40.

### Advantages of the Embodiment

In this embodiment, the following advantages are obtained.

In this embodiment, as discussed above, the controller 22 is configured to control a function of displaying an interface on the display 32 as the information, wherein the interface includes the followings: a plurality of items 41 in the measurement program including temperatures and times, and a graphic schematic diagram 42 schematically representing a thermal cycle with time and visualizing the plurality of items 41 on the thermal cycle. Accordingly, because users can visually compare a plurality of items 41 with a graphic schematic diagram 42 representing a thermal cycle with time based on the plurality of items 41 on the display 32, they can easily understand which items 41 represent which temperatures and times in the measurement program without reading an instruction manual of the automatic analysis apparatus 100. Consequently, even a user who is inexperienced at producing the measurement program can understand which items 41 represent which temperatures and times in the measurement program, and can easily produce a measurement program.

In addition, following additional advantages can be obtained by the aforementioned embodiment added with configurations discussed below.

That is, in this embodiment, as discussed above, the controller 22 is configured to control a function of displaying on the display 32 correspondence-recognizing indication 43 that allows a user to visually recognize correspondences between the plurality of items 41 and parts of the graphic schematic diagram 42. Accordingly, because users can recognize correspondences between the plurality of items 41 and parts of the graphic schematic diagram 42 from the correspondence-recognizing indication 43, they can more easily understand which items 41 represent which temperatures and times in the measurement program.

In this embodiment, as discussed above, the correspondence-recognizing indication 43 includes first correspondence-recognizing indication parts 43a displayed on a plurality-of-setting-items 41 side to represent the correspondences of the plurality of items 41 to the parts of the graphic schematic diagram 42, and second correspondence-recognizing indications 43b displayed on a graphic-schematic-diagram 42 side to represent the correspondences of the parts of the graphic schematic diagram 42 to the plurality of items 41. Accordingly, because users can intuitively recognize correspondences between the plurality of items 41 and parts of the graphic schematic diagram 42 from the first correspondence-recognizing indication part 43a and the second correspondence-recognizing indication part 43b as two part of the correspondence-recognizing indication 43, they can further more easily understand which items 41 represent which temperatures and times.

In this embodiment, as discussed above, the second correspondence-recognizing indication parts 43b are positioned on the parts of the graphic schematic diagram 42 corresponding the plurality of items 41. Accordingly, because users can more intuitively recognize which items 41 represent which temperatures and times in the measurement program from the second correspondence-recognizing indication parts 43b, they can more easily understand which items 41 represent which temperatures and times in the measurement program.

In this embodiment, as discussed above, the controller 22 is configured to control a function of displaying on the display 32 a display area 47 for displaying a simulation graph 46 obtained by simulating the measurement program based on values that are input as the plurality of items 41, and a switch icon 48 for accepting manual operation of displaying the simulation graph 46 on the display area 47; and the controller 22 is configured to display the simulation graph 46 on the display area 47 in response to the manual operation on the switch icon 48. Accordingly, because users can confirm the simulation graph 46 based on values that are input as the plurality of items 41, they can check whether the simulation graph 46 corresponds to their desired graph (in other words, whether a desired measurement program is produced). Also, because the simulation graph 46 can be displayed in response to the manual operation on the switch icon 48, based on values that have been provided as inputs of all the items 41, the simulation graph 46 corresponding to the completed input values. As a result, the simulation graph 46 can be easily checked as compared with a case in which the simulation graph 46 is updated every when a value is newly provided as an input of any of the items 41.

In this embodiment, as discussed above, the controller 22 is configured to control a function of displaying on the display 32 a display area 49 for displaying time required to execute the measurement program based on values that are input as the plurality of items 41; and the controller 22 is configured to display the required time on the display area 49 when a user operates the switch icon 48 in addition to the simulation graph 46 on the display area 47. Accordingly, because users can confirm not only simulation graph 46 but also the required time, they can know how long it takes to measure the sample.

In this embodiment, as discussed above, the analysis apparatus is configured to be able to produce a plurality of measurement programs corresponding to a plurality of types of measurement patterns as the measurement program; and the controller 22 is configured to display on the display 32 the graphic schematic diagram 42 corresponding to one selected from the plurality of types of measurement patterns. Accordingly, users can easily understand which items 41 represent which temperatures and times in the measurement program even when types of measurement patterns are switched from one to another.

In this embodiment, as discussed above, the controller 22 is configured to display on the display 32 a switch icon 45 for switching between the plurality of types of measurement patterns; and the controller 22 is configured, when a user operates the switch icon 45, to display on the display 32 the graphic schematic diagram 42 corresponding to one selected from the plurality of types of measurement patterns by switching between the plurality of types of measurement patterns through the manual operation of the switch icon. Accordingly, the graphic schematic diagram 42 corresponding to one selected from the plurality of types of measurement patterns can be easily displayed by manually operating the switch icon 45,

In this embodiment, as discussed above, the graphic schematic diagram 42 includes a first graphic schematic diagram part 42a entirely representing the thermal cycle with time, and a second graphic schematic diagram part 42b corresponding an enlarged part of the first graphic schematic diagram part 42a. Accordingly, even if some of the items 41 relate to very small parts of the first graphic schematic diagram part 42a and are not easily confirmed only in the first graphic schematic diagram part 42a, users can confirm the very small parts in the second graphic schematic diagram part 42b so that they can easily understand which items 41 represent which temperatures and times in the measurement program.

In this embodiment, as discussed above, the controller 22 is configured to display on the display the plurality of items 41 and the graphic schematic diagram 42 on the common setting screen 40. Accordingly, because users can easily visually compare a plurality of items 41 with a graphic schematic diagram 42 representing a thermal cycle with time based on the plurality of items 41 on the common setting screen 40, they can easily understand which items 41 represent which temperatures and times in the measurement program.

### Modified Embodiment

Note that the embodiment disclosed this time must be considered as illustrative in all points and not restrictive. The scope of the present invention is not shown by the above description of the embodiments but by the scope of claims for patent, and all modifications (modified examples) within the meaning and scope equivalent to the scope of claims for patent are further included.

While the example in which the analysis apparatus is a spectroscopic analysis apparatus has been shown in the aforementioned embodiment, the present invention is not limited to this. In the present invention, the analysis apparatus may be an analysis apparatus other than such a spectroscopic analysis apparatus as long as the analysis apparatus can produce a measurement program for measuring a sample by using a measurer while changing a temperature of the sample by using a temperature adjuster. For example, the analysis apparatus can be a testing machine configured to artificially create an actual thermal environment and to perform a tensile test, a bending test, a compression test, etc.

While the example in which the measurement program that acquires a Tm value of a nucleic acid included in the sample has been shown in the aforementioned embodiment, the present invention is not limited to this. In the present invention, the measurement program may be a measurement program other than the measurement program that acquires a Tm value of a nucleic acid included in the sample.

While the example in which the plurality of items and parts of the graphic schematic diagram are displayed on a common setting screen has been shown in the aforementioned embodiment, the present invention is not limited to this. For example, the graphic schematic diagram may pop up with the plurality of items being displayed so that the plurality of items and the graphic schematic diagram are displayed. However, in a case in which the graphic schematic diagram pops up, because manual operation for displaying the graphic schematic diagram may pop up will be inconvenient, and viewability will be reduced, it is preferable that the plurality of items and parts of the graphic schematic diagram are displayed on the common setting screen from the viewpoint of operability and viewability.

While the example in which the correspondence-recognizing indication includes the first correspondence-recognizing indication part and the second correspondence-recognizing indication part has been shown in the aforementioned embodiment, the present invention is not limited to this. For example, the correspondence-recognizing indication may include lines or arrows that connect parts of the graphic schematic diagram to the items.

While the example in which two graphic schematic diagrams of the first graphic schematic diagram and the second graphic schematic diagram are included as the graphic schematic diagram has been shown in the aforementioned embodiment, the present invention is not limited to this. For example, three or more graphic schematic diagrams may be included as the graphic schematic diagram. Alternatively, a single schematic diagram may be included as the graphic schematic diagram.

While the example in which the measurement patterns include two measurement patterns of the first measurement pattern and the second measurement pattern has been shown in the aforementioned embodiment, the present invention is not limited to this. For example, the measurement patterns may include three or more the measurement patterns. Alternatively, the analysis apparatus may not be configured to be able to produce a plurality of measurement programs corresponding to a plurality of types of measurement patterns.

While the example in which a plurality of common items are provided for the plurality of types of measurement patterns has been shown in the aforementioned embodiment, the present disclosure is not limited to this. For example, some of the plurality of items in the plurality of types of measurement patterns may be different from each other.

While the example in which the simulation graph is displayed has been shown in the aforementioned embodiment, the present invention is not limited to this. In the present invention, the simulation graph may not be displayed.

While the example in which the required time is displayed has been shown in the aforementioned embodiment, the present invention is not limited to this. In the present invention, the required time may not be displayed.

In the present invention, when a user selects one of the plurality of items, a part of the graphic schematic diagram corresponding to the selected setting item may be highlighted by blinking, coloring, etc. Accordingly, the user can easily understand which items represent which temperatures and times in the measurement program. Also, when the user selects one of parts of the graphic schematic diagram, one of the plurality of items corresponding to the selected part of the graphic schematic diagram may be highlighted by blinking, coloring, etc.

### Modes

The aforementioned exemplary embodiment will be understood as concrete examples of the following modes by those skilled in the art.

### (Mode Item 1)

An analysis apparatus according to mode item 1 includes a measurer configured to measure a sample; a temperature adjuster configured to adjust a temperature of the sample during measurement; a display configured to display information: a controller configured to control a function of displaying an interface on the display as the information, wherein the interface includes the followings: a plurality of items including temperatures and times, and a graphic schematic diagram representing a thermal cycle with time and visualizing the plurality of items on the thermal cycle.

### (Mode Item 2)

In the analysis apparatus according to mode item 1, the controller is configured to control a function of displaying on the display correspondence-recognizing indication that allows a user to visually recognize correspondences between the plurality of items and parts of the graphic schematic diagram.

### (Mode Item 3)

In the analysis apparatus according to mode item 2, the correspondence-recognizing indication includes a first correspondence-recognizing indication part(s) displayed on a plurality-of-setting-items side to represent the correspondences of the plurality of items to the parts of the graphic schematic diagram, and a second correspondence-recognizing indication part(s) displayed on a graphic-schematic-diagram side to represent the correspondences of the parts of the graphic schematic diagram to the plurality of items.

### (Mode Item 4)

In the analysis apparatus according to mode item 3, the second correspondence-recognizing indication parts are positioned on the parts of the graphic schematic diagram corresponding the plurality of items.

### (Mode Item 5)

In the analysis apparatus according to any of mode items 1 to 4, the controller is configured to control a function of displaying on the display a first display area for displaying a simulation graph obtained by simulating the measurement program based on values that are input as the plurality of items, and a first switch icon for accepting manual operation of displaying the simulation graph on the first display area; and the controller is configured to display the simulation graph on the first display area in response to the manual operation on the first switch icon.

### (Mode Item 6)

In the analysis apparatus according to mode item 5, the controller is configured to control a function of displaying on the display a second display area for displaying time required to execute the measurement program based on values that are input as the plurality of; and the controller is configured to display the required time on the second display area in response to the manual operation on the first switch icon in addition to the simulation graph on the first display area.

### (Mode Item 7)

The analysis apparatus according to any of mode items 1 to 6 is configured to be able to produce a plurality of measurement programs corresponding to a plurality of types of measurement patterns as the measurement program; and the controller is configured to display on the display the graphic schematic diagram corresponding to one selected from the plurality of types of measurement patterns.

### (Mode Item 8)

In the analysis apparatus according to mode item 7, the controller is configured to display on the display a second switch icon for switching between the plurality of types of measurement patterns; and the controller is configured in response to manual operation on the second switch icon to display on the display the graphic schematic diagram corresponding to one selected from the plurality of types of measurement patterns by switching between the plurality of types of measurement patterns through the second switch icon.

### (Mode Item 9)

In the analysis apparatus according to any of mode items 1 to 8, the graphic schematic diagram includes a first graphic schematic diagram part entirely representing the thermal cycle with time, and a second graphic schematic diagram part corresponding an enlarged part of the first graphic schematic diagram part.

### (Mode Item 10)

In the analysis apparatus according to any of mode items 1 to 9, the controller is configured to display the plurality of items and parts of the graphic schematic diagram on a common setting screen.

### (Mode Item 11)

In the analysis apparatus according to any of mode items 1 to 10, the controller is configured to execute a measurement and control the temperature adjuster in accordance with the measurement program; and the interface is configured to receive values for the plurality of items input by a user, and the values are set in the measurement program.

## Claims

1. An analysis apparatus comprising:
a measurer configured to measure a sample;
a temperature adjuster configured to adjust a temperature of the sample during measurement;
a display configured to display information; and
a controller configured to control a function of displaying an interface on the display as the information, wherein the interface includes the followings:
a plurality of items including temperature and time, and
a graphic schematic diagram representing a thermal cycle with time and visualizing the plurality of items on the thermal cycle.

2. The analysis apparatus according to claim 1, wherein the controller is configured to control a function of displaying on the display correspondence-recognizing indication that allows a user to visually recognize correspondences between the plurality of items and parts of the graphic schematic diagram.

3. The analysis apparatus according to claim 2, wherein the correspondence-recognizing indication includes a first correspondence-recognizing indication part(s) displayed on a plurality-of- items side to represent the correspondences of the plurality of items to the parts of the graphic schematic diagram, and a second correspondence-recognizing indication part(s) displayed on a graphic-schematic-diagram side to represent the correspondences of the parts of the graphic schematic diagram to the plurality of items.

4. The analysis apparatus according to claim 3, wherein the second correspondence-recognizing indication parts are positioned on the parts of the graphic schematic diagram corresponding the plurality of items.

5. The analysis apparatus according to claim 1, wherein
the controller is configured to control a function of displaying on the display a first display area for displaying a simulation graph obtained by simulating the measurement program based on values that are input as the plurality of items, and a first switch icon for accepting manual operation of displaying the simulation graph on the first display area; and
the controller is configured to display the simulation graph on the first display area in response to the manual operation on the first switch icon.

6. The analysis apparatus according to claim 5, wherein
the controller is configured to control a function of displaying on the display a second display area for displaying time required to execute the measurement program based on values that are input as the plurality of items; and
the controller is configured to display the required time on the second display area in response to the manual operation on the first switch icon in addition to the simulation graph on the first display area.

7. The analysis apparatus according to claim 1, wherein
the analysis apparatus is configured to be able to produce a plurality of measurement programs corresponding to a plurality of types of measurement patterns as the measurement program; and
the controller is configured to display on the display the graphic schematic diagram corresponding to one selected from the plurality of types of measurement patterns.

8. The analysis apparatus according to claim 7, wherein
the controller is configured to display on the display a second switch icon for switching between the plurality of types of measurement patterns; and
the controller is configured in response to manual operation on the second switch icon to display on the display the graphic schematic diagram corresponding to one selected from the plurality of types of measurement patterns by switching between the plurality of types of measurement patterns through the second switch icon.

9. The analysis apparatus according to claim 1, wherein the graphic schematic diagram includes a first graphic schematic diagram part entirely representing the thermal cycle with time, and a second graphic schematic diagram part corresponding an enlarged part of the first graphic schematic diagram part.

10. The analysis apparatus according to claim 1, wherein the controller is configured to display the plurality of items and parts of the graphic schematic diagram on a common screen.

11. The analysis apparatus according to claim 1, wherein
the controller is configured to execute a measurement and control the temperature adjuster in accordance with the measurement program; and
the interface is configured to receive values for the plurality of items input by a user, and the values are set in the measurement program.
